Europäisches Patentamt

European Patent Office

Office européen des brevets

(11) Publication number: **0 141 409**

**A1**

(12) # EUROPEAN PATENT APPLICATION

(21) Application number: **84113189.9**

(22) Date of filing: **02.11.84**

(51) Int. Cl.⁴: **F 16 D 65/54**

(30) Priority: **09.11.83 IT 1202083**

(43) Date of publication of application:
**15.05.85 Bulletin 85/20**

(84) Designated Contracting States:
**AT DE FR GB NL SE**

(71) Applicant: **Collini, Silvano**
**Via Della Chiesa 115**
**I-47023 Cesena (Forli)(IT)**

(72) Inventor: **Collini, Silvano**
**Via Della Chiesa 115**
**I-47023 Cesena (Forli)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Device for actuating disc brakes in motorvehicles or elsewhere.

(57) This invention is concerned with a mechanism for actuating disc brakes in motorvehicles or elsewhere. The mechanism comprises a caliper (2) securely attached to the fixed main frame of a motorvehicle and carrying, on opposite sides with respect to a disc (3) of a disc brake, a pair of friction pads (12) which are engageable by contact with the opposed faces of the disc (3). The peculiar aspect of the mechanism is that it comprises a box-like body (1) securely attached to the cited caliper (2) and accommodating slidably therein a push rod (5) movable parallely to the disc (3) axis; the push rod (5) has at least one ramp region which engages with a first wedge (6) having an inclined face (6a) mating in mutual sliding relationship with an inclined face (8a) of a self-adjustment wedge (8); the self-adjustment wedge (8) engages at its opposite face, relatively to the first wedge (6), with a plunger (10) acting on the friction pad (12) to urge it into engagement with the brake disc (3).

fig.5

"DEVICE FOR ACTUATING DISC BRAKES IN MOTORVEHICLES
OR ELSEWHERE"

This invention relates to a mechanism for actuating
disc brakes in motorvehicles or elsewhere.

Known are several brake types, or devices adapted
to produce a retarding action which opposes the motion
of a machine member or of a machine as a whole.

Barring electric brakes, which operate by converting
kinetic energy into reusable electric power, the energy
dissipated by any brake types is converted into heat.

Specifically, currently used disc brakes wherein
two friction pads are urged from opposite sides against
the faces of a disc mounted rigid with moving parts,
the amount of heat developed is considerable.

Such brake types, while providing a satisfactory
braking effect, are not devoid of shortcomings. In fact,
owing to the friction pads being moved by hydraulic
pistons, it is not unusual for the working liquid to
partly turn into vapor, on account of the high
temperatures generated, the compressible nature whereof
results in the force applied to the pistons for braking
being cancelled or significantly decreased.

Another disadvantage of current disc brakes
originates from the pressure seal rings of the hydraulic
piston; in fact, their hardening or, even worse, their
breaking results in oil leaking out and the operating
pressure level dropping below that required for the braking
action, while the leaking oil may easily flow onto the pads
and disc, thus jeopardizing the ability of the brake to
develop friction.

The poor reliability of hydraulically operated disc brakes makes their application to powerful and heavy industrial vehicles inadvisable.

It is the aim of this invention to obviate such prior drawbacks by providing a mechanism for actuating disc brakes, which drives the pistons acting on the friction pads through a fully mechanical drive arrangement, thus dispensing with the necessity for oil or other liquids under pressure in the direct proximities of the brake disc.

Within the above aim, it is an object of the invention to maintain in all situations a good transfer of the braking force to the pads acting on the brake discs.

This aim, as well as this and other objects such as will be apparent hereinafter, are achieved by a mechanism for actuating disc brakes in motorvehicles or elsewhere, comprising a caliper (2) rigidly associated with the fixed main frame of a motorvehicle and carrying on opposite sides with respect to a disc (3) of a disc brake a pair of friction pads (12) engageable by contact with the opposed faces of said disc (3), and characterized in that it comprises a box-like body (1) rigidly associated with said caliper (2) and accommodating slidably therein a push rod (5) movable parallely to the axis of said disc (3), said push rod (5) having at least one ramp region (5a,5b) in engagement with a first wedge (6) having an inclined face (6a) in mutual sliding engagement with one inclined face (8a) of a self-adjustment wedge (8) adapted to engage, at the opposed face thereof with respect to said first wedge, with a plunger (10) acting on a friction pad (12) to engage it with said brake disc (3).

Further features and advantages of the invention will be more clearly understood from the following description of a preferred, but not exclusive, embodiment of the inventive mechanism, as illustrated by way of example and not of limitation in the accompanying drawings, where:

Figure 1 is a side elevation view of a brake disc incorporating a mechanism according to the invention;

Figure 2 shows in side elevation and top plan views respectively, a detail of Figure 1;

Figure 3 shows in full view and in section another detail of a mechanism according to the invention;

Figure 4 shows two views of a further detail of the mechanism of this invention;

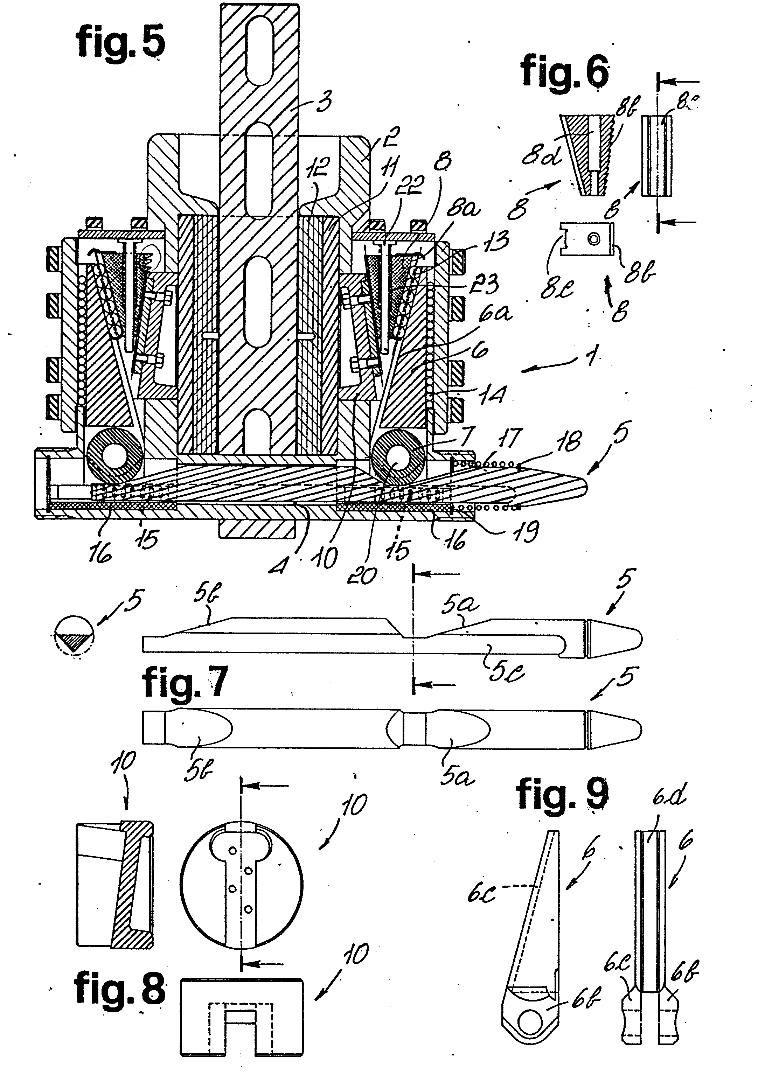

Figure 5 is a sectional view of Figure 1, taken along the line X-X;

Figure 6 shows in two views and a section the self-adjustment wedge according to the invention;

Figure 7 shows in two views and a section the push rod according to the invention;

Figure 8 shows in two views and a section the plunger according to the invention; and

Figure 9 shows two views of the first wedge of this invention.

With reference to the drawing views, a device according to the invention comprises a box-like body,

0141409

generally designated with the reference numeral 1, which is rigidly associated with a caliper 2 bonded to the fixed main frame of a machine and extends above both faces of a brake disc 3 rigid with a part to be braked.

Formed on the interior of the box-like body is a seat 4 which accommodates a push rod 5 slidably therein, said push rod extending parallel to the axis of the disc 3 and being movable relatively to the box-like body in a substantially parallel direction to its own axis.

The push rod 5 has two regions 5a and 5b, respectively, of ramp-like configuration, each engaging with a first wedge 6 from opposed sides with respect to the brake disc. In order to minimize wear and friction, between said ramp of the push rod 5 and the first wedge 6, there is provided a roller 7 which is associated rotatably with the first wedge 6.

Thus, the first wedge is made movable perpendicularly to the axis of the push rod 5 upon the rod being moved parallely to its own axis.

The first wedge is formed with an inclined face 6a slidably mating with an inclined face 8a of a self-adjustment wedge 8 movable in a substantially parallel direction to the axis of the push rod 5.

On the side away from this inclined face, the self-adjustment wedge engages with a plunger 10 which engages, in turn, with a friction pad 12 through a pad holder 11.

Again in order to reduce frictional resistance, between the first wedge and self-adjustment wedge, there are provided a first plurality of bearing needles 13, and a second plurality of bearing needles 14 are provided between the first wedge and wall of the box-like body.

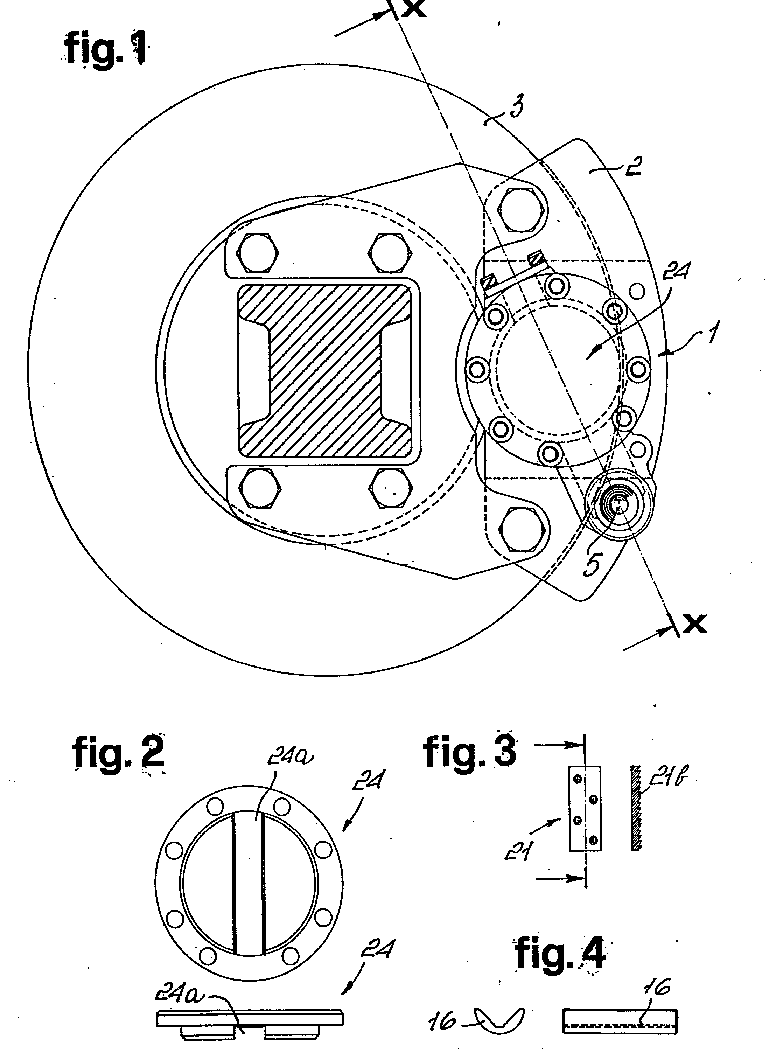

To review the individual components in more detail, it may be seen that the push rod is formed at the bottom with a sliding surface 5c adapted to engage with a plurality of shoes 15 carried on a sliding seat 16, shown best in Figure 4, which is rigidly associated with the walls of the seat 4.

The push rod 5 further carries, externally and coaxially therewith, a biasing spring 17 having one end engaged with a first ring 18 carried on the push rod 5 and the other end in abutment relationship with a second ring 19 carried in the seat 4.

The first wedge 6 has on its push rod side a pair of flanges 6b and 6c wherein a shaft 20 of the roller 7 engages rotatably.

The first wedge and self-adjustment wedge are formed, on the mutually confronting inclined faces thereof, with guide grooves 6d and 8c, respectively, which accommodates the needles of said first plurality of bearing needles.

The self-adjustment wedge has on its face away from the face confronting said first wedge a plurality of teeth 8b adapted to engage with a plurality of teeth 21b correspondingly carried on a small plate 21, shown best in Figure 3 and being rigidly associated with the plunger 10.

0141409

Across the self-adjustment wedge, moreover, there extends in a substantially perpendicular direction to its direction of movement in operation a guide seat 8d accommodating a rod 22 and self-adjustment spring 23. The rod 22 abuts, under the bias from the self-adjustment spring 23, against a wall of the box-like body such as to urge the self-adjustment wedge to slide against the plunger. Thus, automatic adjustment of the mechanism is achieved as the friction pads wears, since the tooth pluralities only permit for movement of the self-adjustment wedge in one direction.

For completeness of illustration, it should be added that the box-like body is provided with a reaction plug 24, shown best in Figure 2, which defines, with its inside surface, a guide sliding seat 24a in the box-like body for the first wedge. As mentioned, in order to reduce friction between the first wedge and this surface, there are provided a second plurality of bearing needles 14.

The operation of the inventive mechanism may be appreciated from the foregoing description.

On applying the brake, the push rod is driven along its own axis, either mechanically or hydraulically, and caused to move, through the roller 7, the first wedge 6 which becomes operative to shift the self-adjustment wedge and, accordingly, the plunger which urges, in turn, the friction pad against the brake disc.

It has been found that, in actual practice, a mechanism as provided by the invention achieves, with wedges ensuring that the drive takes place through ramp surfaces, an increase of the actuating force which contributes to the reliability of the braking system as a whole.

Furthermore, where the push rod is actuated hydraulically, the working liquid is kept away from the contact area of the pads with the disc, and hence away from areas liable to attain high temperatures.

In the course of actual tests, it has been found that best results, as regards drive, increasing actuating force and operation, are to be achieved with the inclined faces of the push rod and wedges set at an inclination angle of 15°.

The above description makes reference to a mechanism acting on both faces of the brake disc, but it should be understood that, similarly to other braking systems for automobiles, this mechanism could also use a single operational unit and the caliper left floating.

It should be further added that, owing to the simple form of actuation provided, the inventive mechanism may be implemented in modular assemblies to be mounted in banks for simultaneously braking several brake discs through the actuation of a single push rod arranged to act against all of the first wedges in the braking arrangement.

The mechanism as disclosed is susceptible to many modifications and changes without departing from the scope of this inventive idea; further, all of the

0141409

details may be replaced with technically equivalent elements.

In practicing the invention, the materials used, as well as the dimensions, may be any ones contingent on individual requirements and the state of the art.

0141409

<u>CLAIMS</u>

1. A mechanism for actuating disc brakes in motorvehicles or elsewhere, comprising a caliper rigidly associated with the fixed main frame of a motorvehicle and carrying on opposite sides with respect to a disc of a disc brake a pair of friction pads engageable by contact with the opposed faces of said disc, and characterized in that it comprises a box-like body rigidly associated with said caliper and accommodating slidably therein a push rod movable parallely to the axis of said disc, said push rod having at least one ramp region in engagement with a first wedge having an inclined face in mutual sliding engagement with one inclined face of a self-adjustment wedge adapted to engage, at the opposed face thereof with respect to said first wedge, with a plunger acting on a friction pad to engage it with said brake disc.

2. A mechanism according to Claim 1, characterized in that said push rod has two ramp-like regions each in engagement with a first wedge on opposed sides with respect to said disc.

3. A mechanism according to Claims 1 and 2, characterized in that it comprises at least one roller interposed between each of said ramp-like regions of said push rod and said first wedge.

4. A mechanism according to the preceding claims, characterized in that it comprises a first plurality of bearing needles interposed between said first wedge and said self-adjustment wedge.

5. A mechanism according to one or more of the preceding claims, characterized in that said self-adjustment wedge has on the face thereof in engagement with said plunger a plurality of teeth meshing with a plurality of teeth carried on said plunger, said self-adjustment wedge being slidably movable relatively to said plunger under the action of a biasing means in the home position to take up the wear of said friction pad.

6. A mechanism according to one or more of the preceding claims, characterized in that said box-like body comprises a reaction plug defining, on the inside surface thereof, a guide sliding seat for said first wedge.

7. A mechanism according to one or more of the preceding claims, characterized in that said first wedge is slidably movable relatively to said reaction plug, a second bearing needle plurality being provided between said guide sliding seat and said first wedge.

8. A mechanism according to one or more of the preceding claims, characterized in that said push rod is slidably movable relatively to said box-like body in a substantially parallel direction to its own axis, a plurality of shoes being interposed between said rod and the seat accommodating it inside said box-like body.

9. A mechanism according to one or more of the preceding claims, characterized in that said first wedge is pivotally associated with said roller intervening between said first wedge and said push rod.

1/2

**fig. 1**

**fig. 2**

**fig. 3**

**fig. 4**

0141409

fig. 5

fig. 6

fig. 7

fig. 8

fig. 9

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | FR-A-1 345 576 (REGIE NATIONALE DES USINES RENAULT)<br><br>* Whole document, figures 1-3 *<br><br>--- | 1 | F 16 D 65/54 |
| A | EP-A-0 002 632 (VERLINDE, SOCIÉTÉ ANONYME)<br><br>* Whole document, figures 1,2 *<br><br>--- | 1 | |
| A | DE-A-1 675 155 (LICENTIA PATENT-VERWALTUNGS-GmbH)<br><br>* Whole document, figure *<br><br>--- | 1 | |
| A | DE-A-2 609 465 (WABCO WESTINGHOUSE AIR BRAKE CO.)<br><br>--- | | **TECHNICAL FIELDS SEARCHED (Int. Cl.4)**<br><br>F 16 D 65/00<br>B 61 H 15/00 |
| A | DE-A-2 151 192 (AIRHEART PRODUCTS INC.)<br><br>----- | | |

The present search report has been drawn up for all claims

| Place of search | Date of completion of the search | Examiner |
|---|---|---|
| THE HAGUE | 14-02-1985 | BRAEMS |